# EUROPEAN PATENT APPLICATION

(11) **EP 2 796 434 A1**
(43) Date of publication of application: **29.10.2014**
(21) Application number: 13164850.3
(22) Date of filing: 23.04.2013
(51) Int. Cl.: C04B 28/02, C04B 18/24, C04B 18/28, C04B 20/10

(54) **Process for the treatment of cellulose fibers**

(71) Applicant: Redco NV, 1880 Kapelle-op-den-Bos (BE)
(72) Inventor: de Lhoneux, Benoît, 5000 Namen (BE); Verleene, Dave, 2100 Deurne (BE); Bordin, Ruben, 2800 Mechelen (BE)
(74) Representative: Wauters, Davy Erik Angelo

(57) **Abstract**

The present invention relates to methods for the treatment of cellulose fibers comprising
-a step of impregnation of said cellulose fibers with a solution comprising a tetraalkoxysilane,
-a further step of squeezing said solution from in between the cellulose fiber walls,
and wherein the weight ratio of said solution to the dry weight of said cellulose fibers after said further step is lower than 2.

The treated cellulose fibers, their use for the manufacture of fiber cement products and fiber cement products comprising the treated cellulose fibers are also disclosed.

## Description

### Field of the invention

The present invention provides a method for the treatment of cellulose fibers. Further objects of the present invention are cellulose fibers treated according to said method and a fiber cement product comprising cellulose fibers treated according to said method.

### Background of the invention

The use of cellulose fibers for strengthening various composite materials such as fiber cement is well known.

Attempts have been made to improve the performance of the cellulose fibers in fiber cement products, in particular their chemical stability in alkaline environment and their dimensional stability.

EP1330420-A1 describes the use of aqueous emulsions of sizing agents selected from the group of alkoxysilane, alkylalkoxysilanes or mixtures thereof for the treatment of cellulose fibers suitable for the manufacture of fiber cement products.

EP0331666-A1 discloses the treatment of cellulose fibers suitable for use in fiber cement products with amorphous silica particles in the presence of a polyelectrolyte.

These treatments have generally drawbacks such as a low or non durable efficiency due to an insufficient bonding of the treating agent to the fiber, and/or, a reduction of fiber strength due to the treatment conditions.

We have now found a method for the treatment of cellulose fibers which overcomes the disadvantages of the prior art methods.

### Summary of the invention

According to a first aspect of the present invention, there are provided methods for the treatment of cellulose fibers comprising
- a step of impregnation of said cellulose fibers with a solution comprising a tetraalkoxysilane,
- a further step of squeezing said solution from in between the cellulose fiber walls, and wherein the weight ratio of said solution to the dry weight of said cellulose fibers after said step of squeezing is lower than 2.

Methods according to the invention comprise a step of impregnation of said cellulose fibers with a solution comprising a tetraalkoxysilane.

The step of impregnation is preferably performed by immersion of the cellulose fibers in a bath containing the solution comprising a tetraalkoxysilane. The step of impregnation can also be carried by spraying the solution comprising a tetraalkoxysilane, or by using a blade coater or a roller coater. Tetraalkoxysilanes can be represented by the general formula (R¹O)₄Si wherein each of the R¹ is an alkyl group.

Tetraalkoxysilanes are preferably chosen from those wherein each R¹ is independently selected from an alkyl group comprising from 1 to 10 carbon atoms, more preferably from 2 to 5 carbon atoms. Particularly preferred is an alkyl group of 2 carbon atoms. The alkyl groups can be linear or branched. Linear alkyl groups are preferred . The said solution comprises possibly a blend of tetraalkoxysilanes . Functionalized alkoxysilanes are less suitable, because of their higher cost and the possible release of harmful substances upon hydrolysis. Tetraalkoxysilanes with alkyl groups comprising from 1 to 10 carbon atoms may hydrolyse faster and may be better soluble in solvents such as ethanol than tetraalkoxysilanes with alkyl groups comprising more than 10 carbon atoms. According to some embodiments of the present invention, the tetraalkoxysilane is preferably tetraethoxysilane. Tetraethoxysilane is also called tetraethyl silicate. Cellulose fibers are selected from but not limited to vegetable fibers such as jute, flax, cotton, straw, hemp, bagasse, ramie, and abaca, waste wood pulps and wood pulps for paper making processes.

The cellulose fibers which are treated according to the methods of the present invention are preferably obtained from wood pulp, more preferably from chemical wood pulp. Kraft pulp is particularly preferred. The cellulose fibers can be bleached or unbleached. Preferable pulps are processed from softwood, e.g. Pinus Radiata, or from hardwood. Good results can be obtained with cellulose fibers from unbleached, softwood kraft pulp. Cellulose fibers characterized by a Kappa number in the range of 20 to 40 as determined by TAPPI method T236 cm-85, more particularly in the range of 20 to 30 are especially preferred. The cellulose fibers can be refined or unrefined, and can be characterized by a Schopper-Riegler degree as measured according to ISO 5267/1 which is advantageously in the range of 12 to 80. Preference is given to cellulose fibers with a length determined according to TAPPI method T271 in the range of from 0.8 to 4 mm. Cellulose fibers with an alkali soluble content as measured according to TAPPI method T212 below 3.5 wt% are preferred. Cellulose fibers with a moisture content in the range between 5 and 20 weight % of water are preferred. Cellulose fibers shaped as a paper sheet are preferably used in the methods according to the invention.

The cellulose fibers can be subjected to additional fiber treatments such as biocide treatment.

The methods according to the present invention comprise a further step of squeezing said solution from in between the cellulose fiber walls. This step of squeezing can be performed by a method selected from but not limited to methods using a belt press or a screw press, vacuum filtration, compression filtration, ultracentrifugation, heat or vacuum treatment. According to preferred embodiments of the present invention, the step of squeezing in the methods for the treatment of cellulose fibers can be performed by passing the impregnated cellulose fibers through a roller press.

Pressing the impregnated fibers through the roller press, also called a padding mangle, forces the solution comprising the tetraalkoxysilane to penetrate into the cellulose fiber walls such as to obtain precipitated silica in the latter, and squeezes the excess of solution from in between the impregnated cellulose fibers. The step of squeezing in the methods according to the present invention is optionally performed directly after the step of impregnation of the cellulose fibers. The weight ratio of said solution to the dry weight of said cellulose fibers after the step of squeezing is lower than 2. This weight ratio is more preferably in the range of from 0.3 to not higher than 1.8. A particularly preferred weight ratio is in the range of from 0.6 to1.2.

The weight ratio of said solution to the dry weight of fibers is to be understood here as the ratio of the weight of the solution comprising the tetraalkoxysilane, the solvent and possible other components such as an alkylalkoxysikane and a catalyst, to the dry weight of the cellulose fibers before the treatment.

By the dry weight of cellulose is understood in the context of the present invention the weight of the cellulose comprising 0 % of water.

The weight ratio of the solution comprising a tetraalkoxysilane to the dry weight of the cellulose fibers after the further step of the treatment is lower than 2 in order to avoid the precipitation of silica between the fibers and optimize its presence within the cellulose cell wall micro- or nanoporosity. The reactivity of the solution comprising the tetraalkoxysilane is preferably such that the hydrolysis and condensation reactions of the tetraalkoxysilane do not start during the step of impregnation.

According to some embodiments of the present invention, the solution comprising a tetraalkoxysilane may further comprise preferably hydrolysis products of said tetraalkoxysilane, and siloxane condensation products of said hydrolysis products.

The hydrolysis of the alkoxy groups of tetraalkoxysilanes converts them partially into hydroxyl groups. The formed polysilicic acids stil have a sufficient content of remaining alkoxy groups which can be activated by catalyzed hydrolysis. Siloxane bonds are formed upon condensation reaction between the hydroxyl groups of the polysilicic acids. The subsequent catalyzed hydrolysis leads to gelation and dehydration to give polymeric SiO₂ structures.

It is advantageous to use a solution further comprising the hydrolysis products of the tetraalkoxysilane, and siloxane condensation products of these hydrolysis products, as they are less volatile than the tetraalkoxysilane. Such siloxane condensation products may e.g. be oligomers of tetraalkoxysilane. Preferred oligomers have a degree of polymerization in the range of from 2 to 10, preferably of from 3 to 8. Tetraethoxysilane comprising its hydrolysis products, and siloxane condensation products of said hydrolysis products are sold as Dynasylan^{®} 40 by Evonik Industries.

According to some embodiments of the present invention, the solution comprising the tetraalkoxysilane may further comprise advantageously an alkylalkoxysilane.

The treatment with a solution further comprising an alkylalkoxysilane can make the cellulose fiber hydrophobic, providing fiber cement products manufactured with the treated cellulose fibers which are possibly characterized by a reduced water absorption, lower water permeability, reduced efflorescence, improved rot and freeze-thaw resistance and less deterioration of mechanical properties upon ageing.

Alkylalkoxysilanes can be represented by the general formula R²ₓ(OR³)₄₋ₓSi wherein x is an integer from 1 up to 3.

The alkylalkoxysilanes are preferably selected from alkyltrialkoxysilanes which can be represented by the general formula R²(OR³)₃Si and dialkyldialkoxysilanes which can be represented by the general formula R²₂(OR³)₂Si, and their blends. The alkylalkoxysilanes have preferably alkyl groups R² which are independently chosen from alkyl groups comprising from 4 to 12 carbon atoms, more prefable from 5 to 10 carbon atoms. An alkylalkoxysilane wherein one or more of the alkyl groups is an n-octyl group is particularly preferred. The alkylalkoxysilanes have preferably alkoxy groups (OR³) which are each independently chosen and selected from alkoxy groups comprising from 1 to 10 carbon atoms, preferably from 1 to 5 carbon atoms. An alkylalkoxysilane comprising an alkoxyl group of 2 carbon atoms is particularly preferred.The alkyl groups R² and R³ are preferably linear alkyls groups. N-octyltriethoxysilane is particularly preferred.

Alkyalkoxysilanes comprising alkyl groups comprising at least 4 carbon atoms can impart the hydrophobic character of the treated cellulose fibers. The use of alkylalkoxysilanes comprising an alkyl group comprising more than 12 carbon atoms could lead to solubility problems. Alkylalkoxysilaners comprising alkoxy groups comprising not more than 10 carbon atoms can hydrolyse faster than their equivalents comprising alkoxy groups with more than 10 carbon atoms. The former are often more soluble in solvents such as ethanol and other alcohols, and water.

According to some embodiments of the present invention, the weight ratio of tetraalkoxysilane to alkylalkoxysilane may preferably range between 95/5 and 5/95. The weight ratio of tetraalkoxysilane to alkylalkoxysilane is more preferably in the range between 80/20 and 20/80, such as in the range between 60/40 and 40/60.

According to some embodiments of the present invention, the solution comprising the tetraalkoxysilane may comprise a catalyst.

A catalyst is to be understood here as a catalyst for the hydrolysis and condensation reactions of the tetraalkoxysilane and the alkylalkoxysilane which is optionally present.

The catalyst may preferably be chosen from neutral, basic compounds such as organotin, organotitanate, metal hydroxides, metal carbonate, metal nitrates, metal fluorides, ammonium salts such as ammonium carbonates, alkylamines, weak organic acids such as oxalic acid and citric acid or salts of organic acids such as magnesium acetate. By weak organic acids is understood those organic acids characterized by a pKa value of at least 1.

Without the use of a catalyst, the hydrolysis reaction may be too slow. Cellulose fibers may degrade rapidly in strong acidic medium.

According to other embodiments of the present invention, the catalyst may be added to the cellulose fibers before their treatment. A particularly preferred catalyst according to this embodiment is a water soluble catalyst.

According to some embodiments of the present invention, the solution comprising the tetraalkoxysilane may comprise a solvent selected from monofunctional alcohols R⁴OH.

Alkylalcohols R⁴OH are preferred. Linear alkylalcohols are particularly preferred. Alkylalcohols wherein R⁴ is an alkylgroup comprising from 1 to 5 carbon atoms, preferably from 2 to 4 carbon atoms are especially preferred. Alkylalcohols comprising an alkyl group with more than 5 carbon atoms can be more difficult to remove after treatment. R⁴OH wherein R⁴ is identical to R¹ group of the tetraalkoxysilane (R¹O)₄Si are particularly preferred for recycling purposes. Especially preferred is an R⁴ group and an R¹ group both being an ethyl group. Ethanol, 1-propanol, 2-propanol, and their mixtures, or mixtures of ethanol, 1-propanol, 2-propanol with water in an amount up to 20 weight %, more preferably with water in an amount up to 10 weight%, particularly preferably with water in an amount of from 5 to not higher than 10 weight % are particularly suitable. According to some preferred embodiments of the present invention, the solvent is ethanol comprising up to 10 weight% of water. Technical grade ethanol comprising 5 weight % of water is most preferred.

According to some embodiments of the present invention, the methods for the treatment of cellulose fibers preferably comprise a further step of drying of said cellulose fibers. The step of drying is performed after the step of squeezing in the methods for treatment. The time span between the step of squeezing and the step of drying in the methods according to the present invention may allow the hydrolysis and condensation reactions of the tetraalkoxysilane and the alkylalkoxysilane which is optionally present, to take place. This time span can be determined experimentally by determining the ash content of the treated cellulose at several intervals between the step of squeezing and the step of drying. The time span may vary from 1 or 2 minutes, up to several hours or even days. As an example the time span is in the range of 1 minute to 12 hours, e.g. between 5 minutes and 8 hours.

The step of drying comprises preferably removal of the solvent. The step of drying preferably removes simultaneously the hydrolysis products of the tetraalkoxysilane and the alkylalkoxysilane if present. The step of drying may be performed in a ventilated oven or under vacuum, and at temperatures possibly ranging from 20°C to 120°C, preferably from 25°C to 80°C. The step of drying of the treated cellulose fibers may reduce the presence of volatile organic compounds in products which are manufactured with the treated fibers. The removed solvent and the hydrolysis products are preferably recovered which is economical and ecologic.

According to a second aspect of the present invention, there are provided cellulose fibers which have been treated according to the methods of the present invention.

According to a third aspect of the present invention, there is provided a use of the cellulose fibers treated according to the methods of the present invention for the manufacture of fiber cement products.

According to another aspect of the present invention, there are provided fiber cement products comprising the cellulose fibers treated according to the methods of the present invention.

Fiber cement products are manufactured starting from an aqueous suspension comprising hydraulic binders, fibers, and possibly fillers and additives. This aqueous suspension is mixed in order to obtain a uniform distribution of the components. The suspension is then dewatered. The so obtained green fresh product can be shaped into a flat sheet, a corrugated sheet or a tube. The green shaped product is then hardened under atmospheric conditions (air-curing) or under specific pressure and temperature conditions (autoclaving).

The reinforcing fibers used in the manufacture of fiber cement products are from synthetic and/or natural origin. Among synthetic reinforcing fibers, poly(vinylalcohol), polypropylene and polyacrylonitrile fibers can be mentioned. As natural reinforcing fibers, cellulose fibers have replaced since years the asbestos fibers. In the case of autoclaved fiber cement products, cellulose fibers are usually the sole source of reinforcing fibers.

The Hatschek process is most widely known for the manufacturing of fibre-cement products. Other manufacturing processes known by the man skilled in the art which can be cited are Magnani, Mazza, Flow-on, extrusion and injection. The Hatschek process, particularly suited for the manufacture of flat sheets, corrugated sheets and tubes, is based on the use of a dewatering cylindrical sieve. In this way, a layer originating from a diluted suspension of fibres, cement, fillers and additives contained in a vat is transferred to a felt, through a cylindrical sieve; this layer is then enrolled on a forming drum until the required thickness of the sheet is obtained.

The fibre-cement sheet shaped on the forming drum is cut and removed from the drum, once the desired thickness is obtained.

The fiber cement products comprising the cellulose fibers which have been treated according to the method of the present invention may have an improved durability over fiber cement products not comprising the treated cellulose fibers according to the present invention.

The amount of treated cellulose fibers in the fiber cement products is preferably in the range of 0.5 to 15 weight % with respect to the dry weight of the hydraulic composition, preferably between 2 and 10 weight % with respect to the dry weight of the hydraulic composition.

The dry weight of the hydraulic composition is to be understood here as the weight of the hydraulic composition before dilution with water necessary to prepare the fiber cement slurry which is used in the manufacture of the fiber cement product.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, which illustrate, by way of example, the principles of the invention. This description is given for the sake of example only, without limiting the scope of the invention.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

### Fiber treatment

A sample of a paper sheet of unbleached kraft cellulose containing about 10% moisture is impregnated with a solution comprising tetraethoxysilane and optionally n-octyltriethoxysilane, ethanol (technical grade), and optionally a catalyst such as dibutyltindilaurate (DBTDL). The excess solution is removed using a roller press.

The obtained saturated paper is left under plastic cover for up to 48 hours. The fibers are subsequently dried by forced air circulation followed, optionally by vacuum drying at 60 °C.

### Preparation of fiber cement test samples

The fibers treated as explained in the preceding paragraph are dispersed in water using a laboratory desintegrator and mixed afterwards with the other components of the hydraulic composition comprising ordinary Portland cement, amorphous calcium carbonate and amorphous silica. A flocculant based on polyacrylamide is added and the mixture is poured immediately after in a mould of a filter press of dimension 70*200 mm and the excess water is removed by pressure.

The fiber cement test samples are cured under plastic at room temperature for 14 days.

### Manufacture of fiber cement products on pilot Hatschek line

The treated fibers have been tested in compositions which were used to manufacture fiber cement products on a pilot Hatschek line reproducing the characteristics of the products obtained on industrial lines.

These compositions are diluted with water such as to obtain cementitious slurries with a consistency (i.e. the concentration of solids per unit volume of suspension) of about 35 g/l in the vat.

The sheets were hardened overnight at 50°C at 100% relative humidity.

### Ageing cycles

A cement water is made by stirring 300 g of ordinary Portland cement during 24 hours and after decantation the salt saturated solution is separated from the cement and used for the wet part of the wet/dry cycling.

The fiber cement test samples are immersed into the cement water prepared as described above for 24 hours at room temperature and are placed in the drying oven at 70 °C for 24 hours. This cycle is repeated 3 times.

### Bending tensile strength

The fiber cement samples are tested in a 3 points bending test machine using a span of 146 mm and a speed of 10 mm/minute.

From the load-displacement curve, the modulus of rupture (MOR) and the work of fracture (WOF) up to the maximum of the load are calculated.

The density is evaluated by respective measurement of the weight and apparent volume.

### Example 1

2 kg of a 300 g/m² paper made of 100% unbleached kraft pulp is immersed in 6 l of a solution comprising :
Dynasylan^{®}40 (an ethyl polysilicate with a silicon dioxide content of approximately 40-42%, commercialized by Evonik Industries ): 59 wt% Ethanol technical grade (solvent; comprising about 5 weight% of water): 35 wt% DBTDL : 6 wt%
during 3 minutes at room temperature.
Wt % means weight/weight %.

The wet paper is squeezed using a roller press run at 6 bar pressure. The weight increase of the impregnated cellulose fibers after having passed through the roller press is about 85%. The impregnated fibers are left for 24 hours under plastic. The ethanol is removed afterward through forced ventilation at room temperature in a fume hood.

The silica content of the fibers was 19.5 weight % as measured by dry ashing at 600 °C.

The fibers are redispersed in water and used for the manufacture of fiber cement composite test samples of following composition:
Cellulose weight (i.e. the dry weight of cellulose as measured before treatment) : 6 wt%
Amorphous silica: 6 wt%
Calcium carbonate: 15 wt%
Ordinary Portland Cement: 73 wt%
3 samples were tested for bending strength without any further treatment, while 3 others were submitted to 3 ageing cycles as described above.

### Example 2

A similar procedure was followed for example 2 except that the treating solution comprised:
Dynasylan^{®} 40 : 42 wt%
n-Octyltriethoxysilane (Z-6341 commercialised by Dow Corning): 16 wt %
Ethanol technical grade: 39.5 wt%
DBTDL: 2.5 wt %
The silica content of the fibers is 17% as measured by by dry ashing at 600°C.

### Comparative example 1

Fiber cement samples were made using untreated fibers and evaluated in a similar way as described hereabove.

The average bending strength, density and work of fracture of the composites before and after 3 wet/dry cycles are reported in table 1.

**Table 1**

| | Example 1 | | Example 2 | | Comparative example 1 | |
|---|---|---|---|---|---|---|
| Ageing | Before | After | Before | After | Before | After |
| MOR (MPa) | 14,2 | 14 | 13,9 | 18,8 | 15,6 | 13 |
| WOF (J/m²) | 1886 | 1050 | 1997 | 1117 | 2894 | 740 |
| Density (10³ kg/m³) | 1,68 | 1,72 | 1,69 | 1,72 | 1,71 | 1,77 |

While the bending strength decreases for the comparative example 1, it is stable or increases for fiber cement samples comprising the treated fibers (examples 1 and 2).

The work of fracture reduces with the number of cycles but less for samples 1 and 2 comprising the treated fibers with respect to the comparative example wherein untreated fibers were used.

### Example 3

The same procedure as example 1 was followed, except that the composition of the solution for the treatment of the cellulose fibers comprises :
Dynasylan^{®} 40: 50 wt %
n-Octyltriethoxysilane (Z-6341 commercialised by Dow Corning): 15 wt %
Ethanol technical grade : 30 wt %
DBTDL: 5 wt %
and the hydraulic composition for the manufacture of the fiber cement test samples comprises :
Cellulose: 6 wt %
Amorphous silica: 6.4 wt %
Calcium carbonate: 15 wt %
Ordinary Portland Cement: 72.6 wt %

### Example 4

The same procedure as example 3 was followed, except that the composition of the solution for the treatment of the cellulose fibers comprises :
Tetraethoxysilane (Dynasylan^{®} A): 50 wt%
n-Octyltriethoxysilane (Z-6341 commercialised by Dow Corning): 15 wt%
Ethanol technical grade: 30 wt%
DBTDL: 5 wt%

### Comparative example 2

Untreated fibers were used to manufacture the fiber cement test samples according to the composition of examples 3 and 4.

The bending strength, density and work of fracture of the composites of the fiber cement samples obtained in examples 3 and 4, and in comparative example 2 before and after 3 wet/dry cycles are reported in table 2.

**Table 2**

| | Example 3 | | Example 4 | | Comparative example 2 | |
|---|---|---|---|---|---|---|
| Ageing | Before | After | Before | After | Before | After |
| MOR (MPa) | 12,7 | 15,7 | 13,1 | 15,8 | 14,6 | 12,1 |
| WOF (J/m²) | 2318 | 1200 | 3161 | 941 | 3547 | 892 |
| Density (10³ kg/m³) | 1,65 | 1,67 | 1,67 | 1,69 | 1,68 | 1,72 |

An improvement of ageing behaviour of fiber cement products is obtained when cellulose fibers treated with Dynasylan^{®} A or Dynasylan^{®} 40A are used.

### Example 5

The cellulose fibers were treated according to example 1 and used to manufacture fiber cement products on a pilot Hatschek line using the following composition:
Treated cellulose fibers: 3 wt %
Untreated fibers refined to 60°SR (as determined according to ISO 5267/1): 2.5 wt %
Amorphous silica: 3 wt %
Calcium carbonate: 15 wt %
Ordinary Portland cement: 76.5 wt %

The weight increase of the impregnated cellulose fibers after passage through the roller press is about 60% and the silica content of the fibers was 8 wt %.

### Comparative example 3

The fibers were treated in a similar way as example 1, except that the solution comprises:
Ethanol technical grade: 85 wt %
n-Octyltriethoxysilane (Z-6341 commercialised by Dow Corning): 15 wt %
and tested to manufacture fiber cement samples according to the composition given in example 5.

### Comparative example 4

Fiber cement test samples according to the composition given in example 5 were manufactured, except that 5.5 wt% of untreated fibers refined to 60°SR and no treated cellulose fibers were used.

The mechanical properties of the fiber cement composite samples obtained in example 5 and in comparative examples 3 and 4 before and after 3 wet/dry cycles are reported in table are summarized in table 3.

**Table 3**

| | Example 5 | | Comparative example 3 | | Comparative example 4 | |
|---|---|---|---|---|---|---|
| | Before | After | Before | After | Before | After |
| MOR (MPa) | 15,7 | 13,3 | 15,7 | 11,1 | 18,5 | 11,5 |
| WOF (J/m²) | 1919 | 493 | 1835 | 261 | 1644 | 142 |
| Density (10³ kg/m³) | 1,77 | 1,79 | 1,76 | 1,79 | 1,79 | 1,81 |

It can be observed from table 3 that the composites containing the fibers according to the invention in addition to untreated refined fibers better retain their mechanical strength (MOR and work of fracture) than untreated fibers or fibers treated with only alkyltrialkoxysilane.

It is to be understood that although preferred embodiments and/or materials have been discussed for providing embodiments according to the present invention, various modifications or changes may be made without departing from the scope and spirit of this invention.

## Claims

1. A method for the treatment of cellulose fibers comprising
- a step of impregnation of said cellulose fibers with a solution comprising a tetraalkoxysilane,
- a further step of squeezing said solution from in between the cellulose fiber walls,
and wherein the weight ratio of said solution to the dry weight of said cellulose fibers after said step of squeezing is lower than 2.

2. A method according to claim 1, wherein said tetraalkoxysilane is tetraethoxysilane.

3. A method according to claim 1 or claim 2, wherein said solution further comprises hydrolysis products of said tetraalkoxysilane, and siloxane condensation products of said hydrolysis products.

4. A method according to any of the preceding claims, wherein said solution further comprises an alkylalkoxysilane.

5. A method according to claim 4 wherein the weight ratio of tetraalkoxysilane to alkylalkoxysilane is between 95/5 and 5/95.

6. A method according to any of the preceding claims, wherein said solution comprises a catalyst.

7. A method according to any of the preceding claims, wherein said solution comprises a solvent selected from monofunctional alcohols R⁴OH.

8. A method according to claim 7, wherein said solvent is ethanol comprising up to 20 weight% of water.

9. A method according to any of the preceding claims, wherein said further step of squeezing is performed by passing said cellulose fibers through a roller press.

10. A method according to any of the preceding claims, comprising a further step of drying of said cellulose fibers.

11. Cellulose fibers treated according to the method of any of the preceding claims.

12. Use of the cellulose fibers treated according to the method of any of the preceding claims for the manufacture of fiber cement products.

13. Fiber cement product comprising cellulose fibers according to claim 11.
